# EUROPEAN PATENT APPLICATION

(11) **EP 4 167 427 A1**
(43) Date of publication of application: **19.04.2023**
(21) Application number: 22200644.7
(22) Date of filing: 10.10.2022
(51) Int. Cl.: H02J 7/00

(54) **PROTECTION CIRCUIT AND BATTERY PACK INCLUDING THE SAME**

(30) Priority: 14.10.2021 KR 20210136833
(71) Applicant: Samsung SDI Co., Ltd., Yongin-si, Gyeonggi-do 17084 (KR)
(72) Inventor: JIN, Kyongpil, Yongin-si 17084 (KR)
(74) Representative: Marks & Clerk LLP

(57) **Abstract**

The present disclosure relates to a protection circuit and a battery pack (1) including the same. The protection circuit of the battery pack includes: a discharge control switch (D-FET) positioned on a discharge path of a battery module and configured to block or connect the discharge path; a controller (20) configured to communicate with an external device (5) through a plurality of pack communication terminals (T1, T2) and output a control signal of controlling on/off of the discharge control switch; a blocking circuit (31) electrically connected between the plurality of pack communication terminals (T1, T2) and the controller (20) and configured to control connection between the plurality of pack communication terminals and the controller; and a blocking control circuit (32) configured to control the blocking circuit (31) to block the connection between the plurality of pack communication terminals and the controller according to the control signal.

## Description

### BACKGROUND OF THE INVENTION

### (a) Field of the Invention

The present disclosure relates to a protection circuit and a battery pack including the same.

### (b) Description of the Related Art

In a small battery pack, a field effect transistor (FET) is mainly used as a discharge control switch for a protection operation during discharge. The FET for the discharge control switch is positioned at a negative electrode side (or a low side) or a positive electrode side (or a high side) of the battery, and a position thereof may be selected according to specifications requested by a customer or specifications of the battery pack.

When the FET for the discharge control switch is positioned at the positive electrode side of the battery, grounds of the battery and a load are connected to each other even when the FET for the discharge control switch is in a turned-off state when the battery and the load are connected. Accordingly, communication is possible between a communication circuit of the battery pack and a communication circuit of the load without an insulating element. On the other hand, in order to drive the FET for the discharge control switch, an additional circuit is separately used, or an analog front end (AFE) chip with a built-in charge pumping circuit is used. In addition, when the FET for the discharge control switch is positioned at the positive electrode side of the battery, high-speed switching of the FET may be very difficult.

When the FET for the discharge control switch is positioned at the negative electrode side of the battery, high-speed switching of the FET is possible. Accordingly, a battery pack used in a vacuum cleaner, a power tool, and the like in which a high-power/low-resistance cell is applied and a quick cutoff of a short-circuit current is required, is designed so that the FET for the discharge control switch is positioned at the negative electrode side of the battery. On the other hand, when the FET for the discharge control switch is positioned at the negative electrode side of the battery, the grounds of the battery and of the load are separated from each other when the FET for the discharge control switch is turned off, so that an overvoltage may be applied to the communication circuit.

The above information disclosed in this Background section is only for enhancement of understanding of the background of the invention, and therefore it may contain information that does not form the prior art that is already known in this country to a person of ordinary skill in the art.

### SUMMARY OF THE INVENTION

Embodiments have been made in an effort to provide a protection circuit and a battery pack including the same that may solve an overvoltage problem that occurs when a FET for a discharge control switch is turned off in a battery pack in which the FET for the discharge control switch is positioned at a negative electrode side of a battery.

An embodiment provides a protection circuit of a battery pack, including: a discharge control switch positioned on a discharge path of a battery module and configured to block or connect the discharge path; a controller configured to communicate with an external device through a plurality of pack communication terminals and output a control signal controlling on/off of the discharge control switch; a blocking circuit electrically connected between the plurality of pack communication terminals and the controller and configured to control connection between the plurality of pack communication terminals and the controller; and a blocking control circuit configured to control the blocking circuit to block the connection between the plurality of pack communication terminals and the controller according to the control signal.

The blocking control circuit may be configured to control the blocking circuit to block the connection between the plurality of pack communication terminals and the controller when the control signal has a voltage level turning off the discharge control switch.

The blocking circuit may include: a first FET electrically connected between a first pack communication terminal among the plurality of pack communication terminals and the controller; and a second FET electrically connected between a second pack communication terminal among the plurality of pack communication terminals and the controller. The first and second FETs may be controlled to be turned off by the blocking control circuit when the control signal has a voltage level turning off the discharge control switch.

The first FET may include a source terminal connected to the controller, a drain terminal connected to the first pack communication terminal, and a gate terminal connected to the blocking control circuit. The second FET may include a source terminal connected to the controller, a drain terminal connected to the second pack communication terminal, and a gate terminal connected to the blocking control circuit.

The first and second FETs may be N-channel MOSFETs.

The blocking circuit may further include: a first resistor connected between the gate terminal and the source terminal of the first FET; and a second resistor connected between the gate terminal and the source terminal of the second FET.

The blocking control circuit may include: a third FET electrically connected between a voltage source outputting a first voltage and gate terminals of the first and second FETs; and a fourth FET electrically connected to a gate terminal of the third FET and controlling connection between a second voltage and the gate terminal of the third FET according to the control signal.

The third FET may include a source terminal connected to the voltage source, a drain terminal connected to the gate terminals of the first and second FETs, and a gate terminal connected to the fourth FET, and the fourth FET may include a source terminal connected to the second voltage, a drain terminal connected to the gate terminal of the third FET, and a gate terminal connected to an output terminal of the controller that outputs the control signal.

The third FET may be a P-channel MOSFET, and the fourth FET may be an N-channel MOSFET.

The blocking control circuit may further include: a third resistor connected between the gate terminal and the source terminal of the third FET; and a fourth resistor connected between the gate terminal of the third FET and the drain terminal of the fourth FET.

The discharge control switch may be a FET that includes a source terminal connected to a negative electrode of the battery module, a drain terminal connected to a first pack terminal, and a gate terminal connected to the output terminal of the controller outputting the control signal.

The discharge control switch may be an N-channel MOSFET.

Another embodiment provides a battery pack, including: first and second pack terminals; a battery module that includes at least one cell and is connected to an external device through the first and second pack terminals; and the protection circuit.

According to the embodiments, it is possible to solve an overvoltage problem that occurs when a FET for a discharge control switch is turned off in a battery pack in which the FET for the discharge control switch is positioned at a negative electrode side of a battery.

At least some of the above and other features of the invention are set out in the claims.

### BRIEF DESCRIPTION OF THE DRAWINGS

FIG. 1 schematically illustrates a battery pack according to an embodiment.
FIG. 2 illustrates an example of a circuit diagram of a battery pack according to an embodiment.

### DETAILED DESCRIPTION OF THE EMBODIMENTS

Embodiments of the present invention will now be described in detail with accompanying drawings. Effects and characteristics of embodiments, and a realization method thereof will now be described in detail with accompanying drawings. In the drawings, same reference numerals indicate same constituent elements, and no repeated descriptions thereof will be provided. As those skilled in the art would realize, the described embodiments may be modified in various different ways, all without departing from the scope of the present invention. The embodiments are provided as examples so that the present disclosure may be thorough and complete, and will sufficiently supply aspects and characteristics of the present invention to a person skilled in the art.

Hence, for the purpose of complete understanding on the aspects and the characteristics of the present invention, processes, factors, and skills that may not be needed by a person of ordinary skill in the art may not be described. In the drawings, relative sizes of elements, layers, and regions may be exaggerated for clarity.

In the present specification, the term "and/or" includes all or random combinations of a plurality of items that are related and arranged. When the embodiments of the present invention are described, the use of "can" or "may" signifies at least one embodiment of the present invention. Regarding the description on an embodiment of the present invention, a singular term may include a plural form unless stated in another way.

In the present specification, terms including ordinal numbers such as first, second, and the like will be used only to describe various components, and are not to be interpreted as limiting these components. The terms are only used to differentiate one component from other components. For example, a first constituent element could be termed a second constituent element, and similarly, a second constituent element could be termed a first constituent element, without departing from the scope of the present invention.

It will be understood that when a constituent element or layer is referred to as being "on," "connected to," or "coupled to" another constituent element or layer, it can be directly on, connected to, or coupled to the other constituent element or layer, or one or more intervening constituent elements or layers may be present. In addition, it will also be understood that when a constituent element or layer is referred to as being "between" two constituent elements or layers, it can be the only constituent element or layer between the two constituent elements or layers, or one or more intervening constituent elements or layers may also be present.

Electrically connecting two constituent elements includes directly connecting two constituent elements, and connecting the same with another constituent element therebetween. The other constituent element may include a switch, a resistor, and a capacitor. When the embodiments are described, an expression of connection signifies electrical connection when an expression of direct connection is not provided.

Hereinafter, a protection circuit and a battery pack including the same according to an embodiment will be described in detail with reference to necessary drawings.

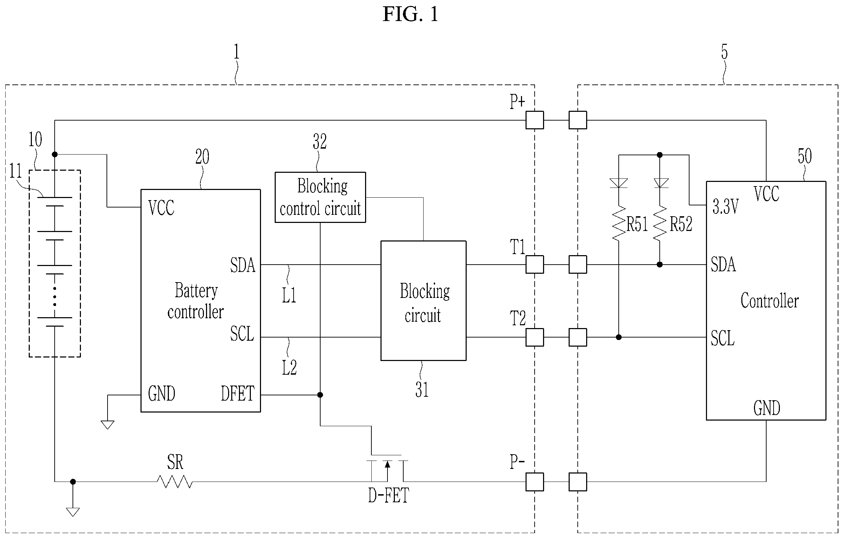

FIG. 1 schematically illustrates a battery pack according to an embodiment.

Referring to FIG. 1, a battery pack 1 according to an embodiment may include a battery module 10, and the battery module 10 may include one or more cells 11 electrically connected to each other in series or in parallel. The battery module 10 may be electrically connected to an external device (for example, a load 5) through pack terminals (P+ and P-) to receive power from the external device or to supply power to the external device.

The battery pack 1 may further include a protection circuit for protecting the battery pack 1 from an overvoltage, an overcurrent, and the like. The protection circuit may include a discharge control switch (D-FET), a battery controller 20, a blocking circuit 31, a blocking control circuit 32, and the like.

The discharge control switch (D-FET) may be electrically connected between the battery module 10 and one of the pack terminals. Referring to FIG. 1 as an example, the discharge control switch (D-FET) may be connected between a negative electrode (a ground of the battery pack 1) of the battery module 10 and the pack terminal (P-). The discharge control switch (D-FET) may perform a function of connecting or blocking a discharge path of the battery module 10 according to control of the battery controller 20.

The discharge control switch (D-FET) may be configured as a field effect transistor (FET). For example, the discharge control switch (D-FET) may be configured as an N-channel metal oxide semiconductor FET (MOSFET) that includes a source terminal connected to the negative electrode side of the battery module 10, a drain terminal connected to the pack terminal (P-), and a gate terminal connected to the battery controller 20.

When the discharge control switch (D-FET) is in a turned-on state, it becomes conductive to be able to connect the discharge path between the negative electrode of the battery module 10 and the pack terminal (P-), and when it is in a turned-off state, it becomes non-conductive to be able to block the discharge path between the negative electrode of the battery module 10 and the pack terminal (P-).

The battery controller 20 may obtain a cell voltage value of each of the cells configuring the battery module 10 through a voltage detection circuit (not shown). The battery controller 20 may obtain a current value flowing between the battery module 10 and the pack terminals (P+ and P-) through a current detection circuit (not shown) connected to a shunt resistor SR. The battery controller 20 may detect an abnormal state (for example, an overcurrent, an overvoltage, a short circuit, and the like) of the battery pack 1 based on a cell voltage value and a current value of the battery module 10. When the abnormal state of the battery pack 1 is detected, the battery controller 20 may output a control signal for turning off the discharge control switch (D-FET) to the discharge control switch (D-FET). That is, when the abnormal state of the battery pack 1 is detected, the battery controller 20 may turn off the discharge control switch (D-FET) to block a discharge path between the battery module 10 and an external device. The battery controller 20 may block the discharge path by turning off the discharge control switch (D-FET) when discharging is to be stopped due to charging start and the like, in addition to the case in which the abnormal state of the battery pack 1 is detected.

The battery controller 20 may be connected to a controller of an external device (for example, a controller 50 of the load 5) through pack communication terminals T1 and T2 to communicate with the controller of the external device. For example, the battery controller 20 may communicate with the controller of the external device through inter-integrated circuit (I2C) communication. In this case, a communication line L1 for transmitting/receiving data and a communication line L2 for transmitting/receiving a clock signal for synchronization of transmission/reception timing may be respectively connected between the battery controller 20 and the pack communication terminals T1 and T2.

On the other hand, as shown in FIG. 1, when the discharge control switch (D-FET) is connected to the negative electrode side of the battery module 10, even if the discharge control switch (D-FET) is turned off, the connection between the positive electrode of the battery module 10 and the pack terminal (P+) may be maintained as it is. Accordingly, even if the discharge control switch (D-FET) is turned off, a voltage increased by the voltage of the battery module 10 compared to the ground of the battery pack 1 is applied to the load 5 through the pack terminal (P+), and due to this, an overvoltage corresponding to the voltage of the battery module 10 occurs in communication terminals SDA and SCL of the load 5. When this overvoltage is directly transmitted to the battery controller 20 through the communication lines L1 and L2, the battery controller 20 may be destroyed.

In the present embodiment, as shown in FIG. 1, in order to solve this problem, the blocking circuit 31 may be disposed at the communication lines L1 and L2 between the battery controller 20 and the pack communication terminals T1 and T2 of the battery pack 1.

The blocking circuit 31 is electrically connected between the communication terminals SDA and SCL of the battery controller 20 and the pack communication terminals T1 and T2 of the battery pack 1, and when the discharge control switch (D-FET) is turned off, it may operate to block the connection between the battery controller 20 and the pack communication terminals T1 and T2.

The blocking control circuit 32 is connected to an output terminal (DFET) for controlling the discharge control switch (D-FET) of the battery controller 20, and it may receive a control signal outputted from the battery controller 20 to the discharge control switch (D-FET). When the control signal received from the battery controller 20 indicates the turned-off state of the discharge control switch (D-FET), the blocking control circuit 32 may control the blocking circuit 31 so that the connection between the battery controller 20 and the pack communication terminals T1 and T2 is blocked.

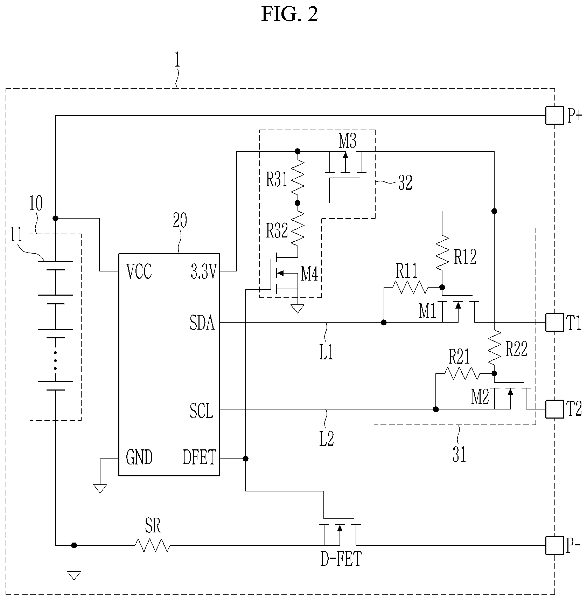

FIG. 2 illustrates an example of a circuit diagram of the battery pack of FIG. 1.

Referring to FIG. 2, the blocking circuit 31 may include a first FET (M1) electrically connected between the first communication terminal SDA of the battery controller 20 and the first pack communication terminal T1. The first FET (M1) may be turned on/off according to a voltage applied to a gate terminal of the first FET (M1) by the blocking control circuit 32, and a voltage level of a signal outputted from the first communication terminal SDA of the battery controller 20. When the first FET (M1) is turned on, it may become conductive to connect the first communication terminal SDA and the first pack communication terminal T1, and when it is turned off, it may become non-conductive to block the connection between the first communication terminal SDA and the first pack communication terminal T1.

The blocking circuit 31 may include a second FET (M2) electrically connected between the second communication terminal SCL of the battery controller 20 and the second pack communication terminal T2. The second FET (M2) may be turned on/off according to a voltage applied to a gate terminal of the second FET (M2) by the blocking control circuit 32, and a voltage level of a signal outputted from the second communication terminal SCL of the battery controller 20. When the second FET (M2) is turned on, it may become conductive to connect the second communication terminal SCL and the second pack communication terminal T2, and when it is turned off, it may become non-conductive to block the connection between the second communication terminal SCL and the second pack communication terminal T2.

The blocking control circuit 32 may include a third FET (M3) electrically connected between a voltage source and the gate terminals of the first and second FETs (M1 and M2), and a fourth FET M4 electrically connected to a gate terminal of the third FET (M3).

The third FET (M3) may be turned on/off according to a voltage applied to the gate terminal of the third FET M3 through the fourth FET (M4). When the third FET (M3) is turned on, it may be conductive to transmit a first voltage applied from the voltage source to the gate terminals of the first and second FETs (M1 and M2). Here, the first voltage may have a voltage level capable of controlling the first and second FETs (M1 and M2) to be turned on.

The gate terminal of the fourth FET (M4) may be connected to the output terminal (DFET) for controlling the discharge control switch (D-FET) of the battery controller 20. The fourth FET M4 may be controlled to be turned on/off according to a control signal outputted through the output terminal (DFET) of the battery controller 20. The fourth FET (M4) may be switched to be turned on when the control signal outputted through the output terminal (DFET) of the battery controller 20 has a voltage level for turning on the discharge control switch (D-FET). In addition, the fourth FET (M4) may be switched to be turned off when the control signal outputted through the output terminal (DFET) of the battery controller 20 has a voltage level for turning off the discharge control switch (D-FET). For example, the voltage level of the battery controller 20 may be a voltage level at or above (or at or below) a threshold voltage at which the discharge control switch (D-FET) is configured to be turned off. When the fourth FET (M4) is turned on, it may become conductive to transmit a second voltage to the gate terminal of the third FET (M3) to turn on the third FET (M3). Here, the second voltage may have a voltage level capable of controlling the third FET (M3) to be turned on.

Referring to FIG. 2 as an example, the first and second FETs (M1 and M2) may be configured as N-channel MOSFETs. In addition, the first FET (M1) may include a source terminal connected to the first communication terminal SDA of the battery controller 20, a drain terminal connected to the first pack communication terminal T1, and a gate terminal connected to the blocking control circuit 32. The second FET (M2) may include a source terminal connected to the second communication terminal SCL of the battery controller 20, a drain terminal connected to the second pack communication terminal T2, and a gate terminal connected to the blocking control circuit 32. In addition, resistors R11 and R21 are respectively connected between the gate terminals and the source terminals of the first and second FETs (M1 and M2), and resistors R12 and R22 are respectively connected between the gate terminals of the first and second FETs (M1 and M2) and the blocking control circuit 32. When the first and second FETs (M1 and M2) are N-channel MOSFETs, the above-described first voltage may be a voltage greater than or equal to threshold voltages of the first and second FETs (M1 and M2). In one example, the first voltage is 3.3 V, which may be supplied from a 3.3 V output terminal of the battery controller 20.

In addition, referring to FIG. 2 as an example, the third FET (M3) may be configured as a P-channel MOSFET, and the fourth FET M4 may be configured as an N-channel MOSFET. In addition, the third FET (M3) may include a source terminal connected to a voltage source supplying the first voltage, a drain terminal connected to the gate terminals of the first and second FETs (M1 and M2), and a gate terminal connected to the fourth FET (M4). The fourth FET (M4) may include a source terminal to which the second voltage is applied, a drain terminal connected to the gate terminal of the third FET (M3), and a gate terminal connected to the output terminal (DFET) of the battery controller 20 and the gate terminal of the discharge control switch (D-FET). In addition, resistors R31 and R32 may be respectively connected between the gate and source terminals of the third FET (M3) and between the gate terminal of the third FET (M3) and the drain terminal of the fourth FET (M4). When the third FET (M3) is a P-channel MOSFET, the above-described second voltage may be a ground voltage (ground voltage of the battery pack 1).

Referring to FIG. 2, when the battery controller 20 outputs a control signal for controlling the discharge control switch (D-FET) to be turned on, the discharge control switch (D-FET) and the fourth FET (M4) are switched to be turned on. Accordingly, a ground voltage is applied to the gate terminal of the third FET (M3) such that the third FET (M3) is turned on, and the third FET (M3) that is turned on transmits the 3.3 V voltage (for example) outputted from the battery controller 20 to the gate terminals of the first and second FETs (M1 and M2). Accordingly, the first and second FETs (M1 and M2) are turned on/off according to voltage levels of signals outputted through the communication terminals SDA and SCL of the battery controller 20, so that normal communication between the battery controller 20 and the load 5 becomes possible. In the normal communication state, when a low-level signal is outputted through the communication terminals SDA and SCL of the battery controller 20, the first and second FETs (M1 and M2) are turned on, and accordingly, output signals of the communication terminals SDA and SCL of the battery controller 20 may be transmitted to the communication terminals of the controller 50 of the load 5. On the other hand, when a high-level signal is outputted through the communication terminals SDA and SCL of the battery controller 20, the first and second FETs (M1 and M2) are turned off. In this case, even when the first and second FETs (M1 and M2) are turned off, a high-level signal may be transmitted to the communication terminals SDA and SCL of the controller 50 of the load 5 by pull-up resistors (referring to R51 and R52 in FIG. 1).

When the battery controller 20 outputs a control signal for controlling the discharge control switch (D-FET) to be turned off, the discharge control switch (D-FET) and the fourth FET (M4) are switched to be turned off. Accordingly, the connection between the gate terminal of the third FET (M3) and the ground of the battery pack 1 is blocked, so that the third FET (M3) is turned off, and the supply of 3.3 V (for example) to the gate terminals of the first and second FETs (M1 and M2) is blocked. Accordingly, the first and second FETs (M1 and M2) are maintained in the turned off state regardless of the signals outputted from the communication terminals SDA and SCL of the battery controller 20, and the communication lines L1 and L2 between the battery controller 20 and the pack communication terminals T1 and T2 may be disconnected.

According to the above-described embodiment, even without a separate insulating circuit, when the discharge control switch (D-FET) is turned off in the state in which the discharge control switch (D-FET) is connected to the negative electrode side of the battery module 10, it is possible to solve the problem that the overvoltage is introduced from the load 5 through the communication lines.

Electronic or electrical devices according to embodiments of the present invention and/or other related devices or constituent elements may be realized by using appropriate hardware, firmware (e.g., an application-specific integrated circuit), software, or combinations of software, firmware, and hardware. For example, various configurations of the above-noted devices may be positioned on one integrated circuit (IC) chip or an individual IC chip. In addition, various configurations of the above-noted devices may be realized on a flexible printed circuit film, a tape carrier package (TCP), a printed circuit board (PCB), or one substrate. The electrical or mutual connections described in the present specification may, for example, be realized by the PCB, wires on different types of circuit carriers, or conductive elements. The conductive elements may, for example, include metallization such as surface metallizations and/or pins, and may include conductive polymers or ceramics. Further, electrical energy may be transmitted by electromagnetic radiation or a light-using radio access.

In addition, the various configurations of the devices may be performed by at least one processor so as to perform the above-described various functions, they may be performed in at least one computing device, and they may be processes or threads for performing computer program instructions and interacting with other system constituent elements. The computer program instruction is stored in a memory realizable in a computing device using a standard memory device such as a random access memory (RAM). The computer program instruction may also be stored in a non-transitory computer readable medium such as a CD-ROM or a flash drive.

Further, a person of ordinary skill in the art must understand that various functions of the computing device may be combined or united to a single computing device, or functions of a specific computing device may be dispersed to at least another computing device while not digressing from the range of the embodiments of the present invention.

### <Description of symbols>

1: battery pack
5: load
10: battery module
11: battery cell
20: battery controller
31: blocking circuit
32: blocking control circuit
50: controller of load
D-FET: discharge control switch
P+, P-: pack terminals
T1, T2: communication terminals
L1, L2: communication lines

## Claims

1. A protection circuit of a battery pack, comprising:
a discharge control switch positioned on a discharge path of a battery module and configured to block or connect the discharge path;
a controller configured to communicate with an external device through a plurality of pack communication terminals and output a control signal of controlling on/off of the discharge control switch;
a blocking circuit electrically connected between the plurality of pack communication terminals and the controller and configured to control connection between the plurality of pack communication terminals and the controller; and
a blocking control circuit configured to control the blocking circuit to block the connection between the plurality of pack communication terminals and the controller according to the control signal.

2. The protection circuit of claim 1, wherein
the blocking control circuit is configured to control the blocking circuit to block the connection between the plurality of pack communication terminals and the controller when the control signal has a voltage level of turning off the discharge control switch.

3. The protection circuit of claim 1 or 2, wherein
the blocking circuit includes:
a first FET electrically connected between a first pack communication terminal among the plurality of pack communication terminals and the controller; and
a second FET electrically connected between a second pack communication terminal among the plurality of pack communication terminals and the controller, and
the first and second FETs are controlled to be turned off by the blocking control circuit when the control signal has a voltage level of turning off the discharge control switch.

4. The protection circuit of claim 3, wherein
the first FET includes a source terminal connected to the controller, a drain terminal connected to the first pack communication terminal, and a gate terminal connected to the blocking control circuit, and
the second FET includes a source terminal connected to the controller, a drain terminal connected to the second pack communication terminal, and a gate terminal connected to the blocking control circuit.

5. The protection circuit of claim 4, wherein
the first and second FETs are N-channel MOSFETs.

6. The protection circuit of claim 4 or 5, wherein
the blocking circuit further includes:
a first resistor connected between the gate terminal and the source terminal of the first FET; and
a second resistor connected between the gate terminal and the source terminal of the second FET.

7. The protection circuit of any of claims 3 to 6, wherein
the blocking control circuit includes:
a third FET electrically connected between a voltage source configured to output a first voltage and gate terminals of the first and second FETs; and
a fourth FET electrically connected to a gate terminal of the third FET and configured to control connection between a second voltage and the gate terminal of the third FET according to the control signal.

8. The protection circuit of claim 7, wherein
the third FET includes a source terminal connected to the voltage source, a drain terminal connected to the gate terminals of the first and second FETs, and a gate terminal connected to the fourth FET, and
the fourth FET includes a source terminal connected to the second voltage, a drain terminal connected to the gate terminal of the third FET, and a gate terminal connected to an output terminal of the controller that outputs the control signal.

9. The protection circuit of claim 8, wherein
the third FET is a P-channel MOSFET, and
the fourth FET is an N-channel MOSFET.

10. The protection circuit of claim 8 or 9, wherein
the blocking control circuit further includes:
a third resistor connected between the gate terminal and the source terminal of the third FET; and
a fourth resistor connected between the gate terminal of the third FET and the drain terminal of the fourth FET.

11. The protection circuit of claim 9 or 10, wherein
the discharge control switch is an FET that includes a source terminal connected to a negative electrode of the battery module, a drain terminal connected to a first pack terminal, and a gate terminal connected to the output terminal of the controller outputting the control signal.

12. The protection circuit of claim 11, wherein
the discharge control switch is an N-channel MOSFET.

13. A battery pack, comprising:
first and second pack terminals;
a battery module that includes at least one cell and is connected to an external device through the first and second pack terminals; and
the protection circuit of any one of claim 1 to claim 12.
